# EUROPEAN PATENT SPECIFICATION

(11) **EP 2 839 350 B1**
(45) Date of publication and mention of the grant of the patent: **09.05.2018**
(21) Application number: 13713629.7
(22) Date of filing: 14.03.2013
(51) Int. Cl.: G10L 13/04, G05B 19/042

(54) **WARNING SYSTEM WITH SYNTHESIZED VOICE DIAGNOSTIC ANNOUNCEMENT CAPABILITY FOR FIELD DEVICES**
WARNSYSTEM MIT DIAGNOSEANSAGEFÄHIGKEIT MIT SYNTHETISIERTER SPRACHE FÜR FELDVORRICHTUNGEN
SYSTÈME D'ALARME À CAPACITÉ D'ANNONCE DE DIAGNOSTIC PAR VOIX SYNTHÉTISÉE POUR DISPOSITIFS DISTANTS

(30) Priority: 16.04.2012 US 201261624511 P
(43) Date of publication of application: 25.02.2015
(73) Proprietor: Saudi Arabian Oil Company, Dhahran 31311 (SA)
(72) Inventor: BALHARETH, Hamad, S., Saudi Aramco, Dhahran, 31311 (SA)
(74) Representative: Gervasi, Gemma
(86) International application number: PCT/US2013/031176
(87) International publication number: WO 2013/158269

(56) References cited:
- US-A1- 2010 164 717
- US-B1- 6 222 547

## Description

### BACKGROUND OF THE INVENTION

### Field of the Invention

This invention relates to the integration of audible status reports into field instrumentation and control devices, including sensors and final elements, such as smart emergency shut-off valves and control valves.

### Description of Related Art

Large industrial facilities such as oil collection plants and refineries, water and wastewater treatment plants, electric utilities and manufacturing plants can include hundreds or thousands of field devices. Field devices include sensors and final elements. Sensors can include pressure, temperature, level and flow measuring sensors and their associated transmitters, position and limit switches, vibration monitors, and other process instruments. Final elements can include electric solenoids, pneumatic actuators and positioners for controlling the starting, stopping and the speed of motors, the opening and closing of valves either fully or to a predetermined position, and heaters and heat exchangers. Field devices are typically connected to a plant-wide central monitoring computer-based system, so that remote field processes can be monitored and controlled from a centralized control location.

In the late 1980s, instrument manufacturers began to embed microprocessors in their field devices which allowed the user to receive diagnostic alarms. However, these diagnostic alarms were only available to operators at the centralized control location. Recent advances in microcomputers and networking have led to advancements in field devices so that they not only permit instrumentation and control to be monitored and directed from a central control location, but they also permit monitoring and control in the field. These advancements providing for control in the field have led to enhanced field monitoring of the health of the field devices themselves. That is, the diagnostic alarms are not only available to operators at the central control location, but also the personnel in the vicinity of the device.

It is known to provide field devices with lights and/or audible alarms that are actuated when a problem with the device has been detected during routine operation or a self-diagnostic check, such as a partial stroke test of valves and valve actuators. See, for example, U.S. Patent No. 7,504,961, "Emergency Isolation Valve Controller with Integral Fault Indicator" (Flanders, assigned to Saudi Arabian Oil Co.), and U.S. Patent No. 8,072,343, "Local Emergency Isolation Valve Controller with Diagnostic Testing and Trouble Indicator," both of which are incorporated by reference. Of course, the purpose of such visible and audible alarms is to attract the attention of personnel in their vicinity. Personnel cannot determine the nature of the problem that caused the alarm to be actuated until they proceed to the local control panel on the device and manually engage the device, e.g., by connecting a portable computer, pad or other smart device to download information, or by pressing a pushbutton type switch to view a display on the device.

As was noted above, a petrochemical or refining facility can contain many thousands of devices that are equipped with these alarm features. It has been found that personnel engaged in other activities in the field who become aware of visible and/or sounding alarms emitted by devices for which they have not then been dispatched to repair or check will not consistently undertake to approach the device to investigate and determine the nature of the problem. If the personnel in the vicinity of the device has not been assigned the task of checking for alarms, there can be a general tendency for such individuals to go about their assigned tasks, based on the assumption that the problem is not significant and/or that others will eventually come to check the device. This lack of knowledge of the reason for the alarm and the associated human response, is a problem that has not been addressed by the prior art.

This is problematic, because a field technician might pass by a field device that is reporting a significant fault without recognizing it, only to learn later from a control room operator of the problem. Likewise, a significant benefit of having control in the field capabilities is to provide for redundancies in the event of a loss in communication between the field and the control room. If this communication is lost, the control room will be unaware of a fault in a field device.

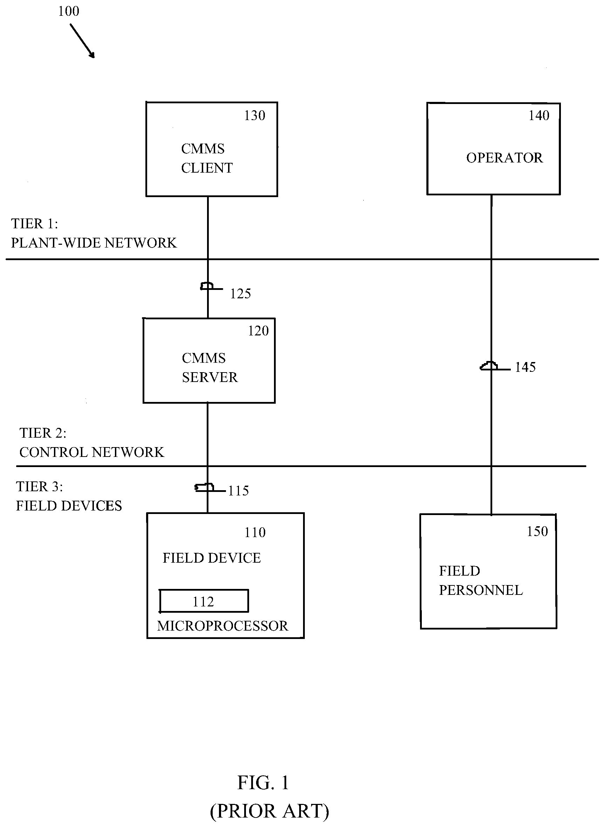

For example, referring to FIG. 1, a prior art embodiment of a warning system 100 for field devices is illustrated. Field devices 110 are located in Tier 3, a CMMS server 120 is located within a control network in Tier 2, and a CMMS client 130 is located within the plant-wide network in Tier 1. Field devices 110 incorporate a microprocessor 112 that provides an instrumentation and control function. For example, if the field device is a sensor, the microprocessor 112 monitors the parameters being monitored by the sensor, for example temperature, pressure, or limit switch status. These monitored parameters are fed to a network 115 which transmits the parameters from field device 110 in Tier 3 to CMMS server 120 in Tier 2, which in turn communicates via network 125 to CMMS client 130 in Tier 1. If the field device is a final element such as a valve controller, the microprocessor 112 provides a control function, such as receiving a signal to close the associated valve. This signal is typically initiated at CMMS client 130 in Tier 1, is transmitted to CMMS server 120 in Tier 2, and then is transmitted to the microprocessor 112 in field device 110 in Tier 3.

In addition to microprocessor 112 performing these instrumentation and control functions, microprocessor 112 monitors the health of the field device. If field device 110 requires maintenance or repair, microprocessor 112 communicates this information upstream to CMMS client 130, via network 115, CMMS server 120, and network 125. An operator 140 assigned to monitor CMMS client 130 receives the message that field device 110 requires maintenance or repair. The maintenance or repair function is conducted by field personnel 150. Operator 140 communicates the maintenance or repair message to field personnel 150 via communications path 145. Depending upon the distance between operator 140 and field personnel 150, and the availability of cellular telephone coverage or radio coverage, this message could be delayed. Similarly, in the event of a malfunction of CMMS server 120, CMMS client 130, or networks 115 or 125, the maintenance or repair message from microprocessor 112 of field device 110 might be delayed or even prevented from reaching operator 140, and thus would not be relayed to field personnel 150. These shortcomings are representative of a problem with the prior art systems.

Further examples of warning systems according to the prior art are known from US 2010/164717 and US 6222547.

It is therefore an object of the present invention to provide a solution whereby field devices can provide audible status reports so that field personnel working in the vicinity can recognize that a field device requires maintenance or repair. Another object of the present invention is that the status reports can guide the field personnel in maintaining or repairing the field device.

### SUMMARY OF THE INVENTION

The above objects and further advantages are provided by the invention according to claim 1 that integrates audible aural or spoken messages in the form of status warnings device alerts (i.e., status reports) into field devices. Further embodiments of the present invention are defined by the dependent claims.

In accordance with one aspect as disclosed, a field device includes a system that integrates a microprocessor with indicating lights, a speaker, one or more pushbuttons, and associated control circuitry in order to provide field personnel in the vicinity of the device with both an audio and visual indication of the health of such devices. A voice synthesizer and/or memory device with pre-recorded messages corresponding to predetermined faults or defects for which the device is tested is provided.

For example, in one embodiment as disclosed, an operator field service or maintenance personnel sees an illuminated indicator light on the field device, signaling that the device has a message for personnel. The field device could have a number of indicator lights of different colors, for example traditional low-voltage incandescent bulbs with colored caps, a single indicator light with illumination provided by one of a number of LEDs. For example, a green light would indicate that an advisory-type of message is available, a yellow light would indicate that a maintenance alarm is present, and a red light would indicate that there is a serious problem requiring immediate attention. Upon approaching the device, the operator presses a pushbutton to receive an aural message. For example, the operator presses a first pushbutton and the device announces, "Air supply low." In an alternative embodiment, there is a second pushbutton to provide additional guidance, for example, "Check air supply and increase to 40 PSI."

In a further embodiment as disclosed, the field device repeatedly announces aural maintenance alarms or serious problems at regular intervals, without requiring an operator to first press a pushbutton. This embodiment functions to draw the attention of a passing field employee who had not noticed that the indicator light is illuminated.

In one embodiment as disclosed, the audible announcements can be a human voice that is recorded, for example, as a WAV file stored in the memory of the final device's microprocessor. In another embodiment, the audible announcements can be generated by a digital text-to-speech synthesizer.

### BRIEF DESCRIPTION OF THE DRAWINGS

The invention will be described in further detail below and with reference to the attached drawings in which the same or similar elements are referred to by the same numerals, and where:
FIG. 1 is a block diagram of a prior art warning system for field devices;
FIG. 2 is a block diagram of a warning system for field devices in accordance with an embodiment of the present invention; and
FIG. 3 is a block diagram of several components of a field device incorporating an embodiment of the present invention.

### DETAILED DESCRIPTION OF THE INVENTION

The present invention broadly comprehends an enhanced warning system for field devices that incorporates means for issuing aural status reports to enable field devices, empowering field personnel to respond more quickly to maintenance and repair messages.

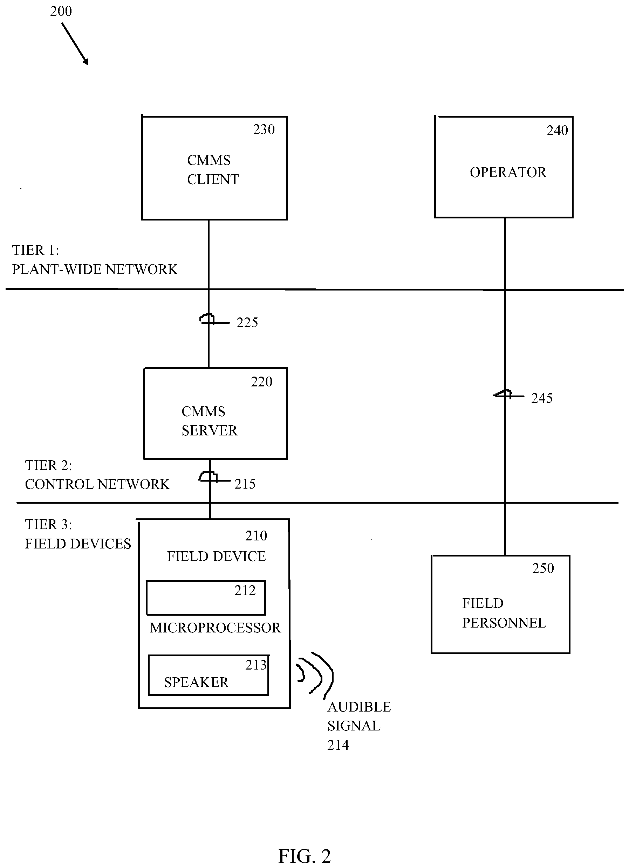

Referring to FIG. 2, an embodiment of the present invention, a warning system 200 for field devices that produces audible aural status reports is illustrated. Field devices 210 are located in Tier 3, a CMMS server 220 is located within a control network in Tier 2, and a CMMS client 230 is located within the plant-wide network in Tier 1. Field devices 210 incorporate a microprocessor 212 that provides an instrumentation and control function. Monitored parameters are fed to a network 215 which transmit the parameters from field device 210 in Tier 3 to CMMS server 220 in Tier 2, which in turn communicates via network 225 to CMMS client 230 in Tier 1. If the field device is a final element, such as a valve controller, the microprocessor 212 provides a control function, such as receiving a signal to close the associated valve. This signal is typically initiated at CMMS client 230 in Tier 1, is transmitted to CMMS server 220 in Tier 2, and then transmitted to microprocessor 212 in field device 210 in Tier 3.

In addition to microprocessor 212 performing these instrumentation and control functions, microprocessor 212 monitors the health of the field device. If field device 210 requires maintenance or repair, microprocessor 212 communicates this information in two ways. Firstly, as with the prior art, microprocessor 212 communicates the maintenance or repair message upstream to CMMS client 230, via network 215, CMMS server 220, and network 225, where it must come first to the attention of operator 240 before any action is taken. Secondly, field devices 210 are provided with a speaker and control circuitry 213 through which microprocessor 212 outputs a signal, which in turn produces an audible signal 214 intended to draw the attention of any field personnel 250 in the area. Ordinarily, the prior art practice of operator 240 communicating the maintenance or repair method to field personnel 250 via communications path 245 will also be available. Thus, the invention allows field personnel 250 to learn of a maintenance or repair message directly and immediately from field device 210, if the field personnel 250 are in the vicinity. The invention also allows them to check the status of field device 210 in the field in the event of a malfunction of CMMS server 220, CMMS client 230, or networks 215 or 225. If field personnel 250 are not in the vicinity of field device 210 and there is no malfunction of CMMS server 220, CMMS client 230, or networks 215 or 225, then operator 240 can communicate the maintenance or repair message to field personnel 250, as in the prior art.

As can be seen, the addition of audible signal capabilities to the field devices provides a redundant path for alerting field personnel of maintenance or repair actions that are required.

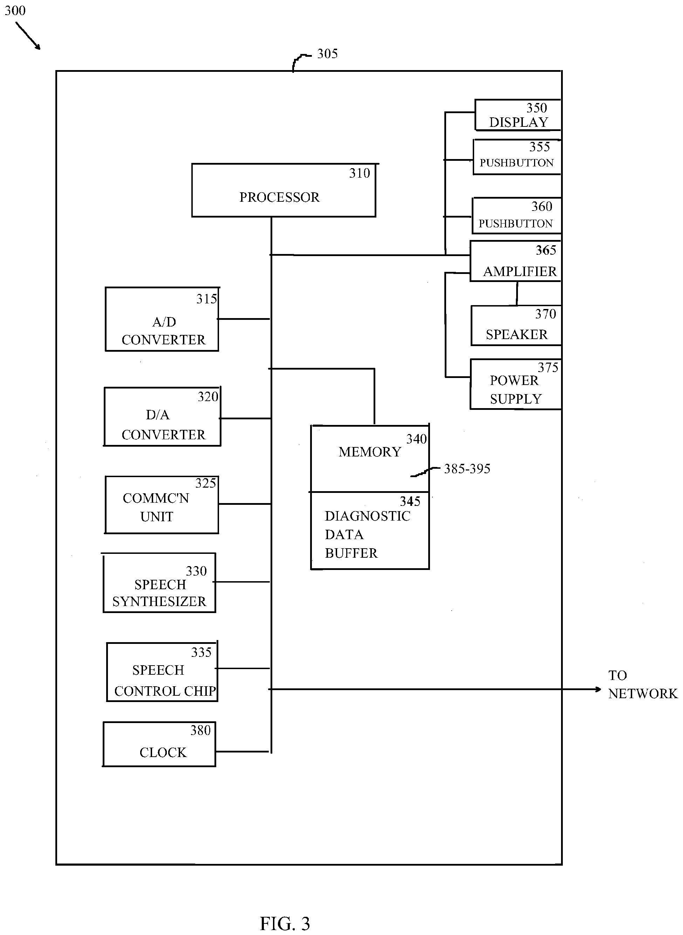

FIG. 3 illustrates a block diagram of several components of a typical field device incorporating an embodiment of the present invention. Field device 300 includes an enclosure 305, processor 310, sensors (not shown), a memory 340, an analog-to-digital (A/D) converter 315 and a digital-to-analog (D/A) converter 320. Memory 340 and diagnostic data buffer 345 are utilized to store a variety of information. A/D converter 315 converts the inputs from one or more sensors from analog to digital format and transfers the corresponding digital signals to processor 310. D/A converter 320 can convert a plurality of outputs from the control network to the field device and is especially useful for final elements. For example, if field device 300 is a digital valve controller, D/A converter 320 can convert a digital command received from the control network to an analog signal that drives a valve actuator to close predetermined percentages, e.g., 50%, or until a predetermined desired flow rate or pressure is achieved.

Field device 300 further includes clock 380 and communication unit 325. Data can be transferred over the control network, or alternatively can be transferred with a portable communications device through communication unit 325.

Speech synthesizer 330 is a voice and sound synthesizer. Inexpensive speech synthesizers are commercially available and their use in the present invention is within the skill in the art. The Magnevation SpeakJet is preprogrammed with 72 speech elements (allophones). Software to program a speech synthesizer in plain-text as opposed to allophones can be incorporated into processor 310, or alternatively the function can be provided as a separate speech control chip 335. Speech control chips are also commercially available. The Magnevation TTS256, which has a built-in 600 rule database to convert English text to allophones can be incorporated in the field devices and actuated by the microprocessor.

Speaker 370 and amplifier 365 provide speech and/or sound to draw the attention of field personnel, and to provide directions to field personnel to identify the problem and its resolution. Power supply 375 provides power to amplifier 365.

In an alternate embodiment, speaker 370 and amplifier 365 only provide speech and/or sound to draw the attention of field personnel if a motion sensor (not shown) detects field personnel and/or vehicles in a predetermined range of proximity to the device.

In addition to the audible alarm, the field device can also be provided with visible alarms, such as indicator lights of different colors (not shown). For example, a green light can indicate that an advisory-type of message is available, a yellow light that a maintenance alarm is present, and a red light that there is a serious problem requiring immediate attention.

Display 350 is typically an LCD screen that can, for example, in the case of a field device that is a sensor, provide a digital readout of pressure, temperature, or other parameter. Display 350 can also be used to provide control instructions, and to provide maintenance and repair messages to field personnel.

In one embodiment of the invention, there are two pushbuttons, 355 and 360. In the event of a malfunction, an alarm routine 385 stored in memory 340 adapted to be executed in processor 310 calls for an audible signal to be sounded by speech synthesizer 330, amplifier 365 and speaker 370. This can be a continuous or variable tone, or a recorded sound or voice such as from a WAV file. In an alternative embodiment, alarm routine 385 calls for text to be sent to speech control chip 335, which converts the text into allophones to be processed by speech synthesizer 330 and passed through amplifier 365 and speaker 370. In yet another alternative embodiment, alarm routine 385 calls for text to be sounded, with alarm routine 385 including a subroutine (or by activating a separate routine) that converts the text into allophones, the allophones being sent directly to speech synthesizer 330, thereby obviating the need for speech control chip 335.

Field personnel hearing a sounded alarm approach field device 300 and press the first pushbutton 355, upon which a status routine 390 stored in memory 340 adapted to be executed in processor 310 calls for a spoken status (e.g., "air supply low") to be sounded by speech synthesizer 330, amplifier 365 and speaker 370. Status routine 390 can include a subroutine (or activate a separate routine) that converts the desired text into allophones to be sent to speech synthesizer 330, or alternatively status routine 390 can send text to a separate speech control chip 335, which then sends allophones to speech synthesizer 330.

The field personnel then presses the second pushbutton 360, upon which an instructional routine 395 stored in memory 340 adapted to be executed in processor 310 calls for a spoken instruction, e.g. "check air supply and increase to 40 PSI", to be sounded by speech synthesizer 330, amplifier 365 and speaker 370. Instructional routine 395 can include a subroutine (or activate a separate routine) that converts the desired text into allophones that are sent to speech synthesizer 330, or alternatively instructional routine 395 sends a text to a separate speech control chip 335, which then sends allophones to speech synthesizer 330. Thus, the invention not only serves the purpose of informing field personnel of maintenance or failures, but also serves to educate them in performing the maintenance or clearing the fault. One of ordinary skill in the art would recognize that in lieu of two pushbuttons, a single pushbutton would suffice, for example by being pressed twice in succession.

The present invention has been described above and with reference to the attached drawings; however, modifications will be apparent to those of ordinary skill in the art and the scope of protection for the invention is to be defined by the claims that follow.

## Claims

1. An instrumentation and control field device (210, 300) comprising:
a processor (212, 310) that monitors the operational status of the instrumentation and control field device (210, 300);
a memory (340) coupled to the processor (212, 310);
a speech synthesizer (330) that produces sounds, including allophones;
a speaker (213, 370);
an amplifier (365);
at least one pushbutton (355, 360);
a motion sensor responsive to personnel (150, 250) and/or vehicles within a predetermined proximity to the instrumentation and control field device (210, 300);
an alarm routine (385) stored in the memory (340) and adapted to be executed by the processor (212, 310) upon a recognition by the processor (212, 310) that the instrumentation and control field device (210, 300) requires repair or maintenance, wherein if the motion sensor indicates personnel and/or vehicles are within the predetermined proximity, the alarm routine (385) causes an audible alarm (214) to be sounded by the amplifier (365) and speaker (213, 370) at a level audible to personnel (150, 250) in the vicinity of the field device (210, 300);
a status routine (390) stored in the memory (340) and adapted to be executed in the processor (212, 310) upon manual actuation of a pushbutton (355) that transmits a text status to the speech synthesizer (330), the speech synthesizer (330) converting the text status to a spoken status and forwarding the spoken status for sounding by the amplifier (365) and speaker (213, 370); and
an instructional routine (395) stored in the memory (340) and adapted to be executed in the processor (212, 310) upon manual actuation of a pushbutton (360) that transmits a text instruction to the speech synthesizer (330), the speech synthesizer (330) converting the text instruction to a spoken instruction and forwarding the spoken instruction for sounding by the amplifier (365) and speaker (213, 370), wherein the text instruction and the spoken instruction guide an operator (150, 250) in providing the required repair or maintenance.

2. The instrumentation and control field device of claim 1, wherein the instrumentation and control field device (210, 300) is a selected one of a: pressure sensor, temperature sensor, level sensor, flow sensor, pressure transmitter, temperature transmitter, level transmitter, flow transmitter, position switch, limit switch, vibration monitor, electric solenoid, pneumatic actuator, heater, and heat exchanger.

3. The instrumentation and control field device (210, 300) of claims 1 or 2, wherein the audible alarm (214) is a prerecorded sound file.

4. The instrumentation and control field device (210, 300) of claims 1 or 2, wherein the audible alarm (214) is selected from a plurality of sounds and the sound is selected based upon the nature of the required repair or maintenance.

5. The instrumentation and control field device (210, 300) of claims 1 or 2, wherein the audible alarm (214) is a text alarm that is transmitted to the speech synthesizer (330) for conversion of the text alarm to a spoken alarm.

6. The instrumentation and control field device (210, 300) of claims 1 or 2, further comprising a speech control chip (335), wherein the text status and text instruction received by the speech synthesizer (330) are first processed by the speech control chip (335), which signals the speech synthesizer (330) to sound predetermined allophones through the amplifier (365) and speaker (213, 370).

7. The instrumentation and control field device (210, 300) of claim 5, further comprising a speech control chip (335) which first processes the text alarm, text status and text instruction that are transmitted by the speech synthesizer (330), and which signals the speech synthesizer (330) to sound predetermined allophones through the amplifier (365) and speaker (213, 370).

8. The instrumentation and control field device (210, 300) of claim 1, further comprising a speech control routine stored in the memory (340) and adapted to be executed in the processor (212, 310), wherein the speech control routine signals the speech synthesizer (330) to sound predetermined allophones through the amplifier (365) and speaker (213, 370).

9. The instrumentation and control field device (210, 300) of claim 5, further comprising a speech control routine stored in the memory (340) and adapted to be executed in the processor (212, 310), wherein the speech control routine processes the text alarm, text status and text instruction transmitted to the speech synthesizer (330) and signals the speech synthesizer (330) to sound predetermined allophones through the amplifier (365) and speaker (213, 370).

10. The instrumentation and control field device (210, 300) of claim 1, further comprising at least one indicator light, and wherein the alarm routine (385) stored in the memory (340) and adapted to be executed by the processor (212, 310) upon a required repair or maintenance further causes a visual alarm to be signaled by the indicator light.

11. The instrumentation and control field device (210, 300) of claim 1 further comprising a red indicator light, a yellow indicator light, and a green indicator light, and wherein the alarm routine (385) stored in the memory (340) and adapted to be executed by the processor (212, 310) upon a required repair or maintenance further causes a visual alarm to be signaled by the green indicator light when the required repair or maintenance is an advisory-type message, by the yellow light when the required repair or maintenance is a maintenance alarm, and by the red indicator light when the required repair or maintenance is a problem requiring immediate attention by an operator (150, 250).

12. The instrumentation and control field device (210, 300) of claim 1, further comprising an operator display screen, and wherein the status routine (390) stored in the memory (340) and adapted to be executed in the processor (212, 310) upon manual actuation of a pushbutton (355) that transmits a text status further causes the text status to be displayed on the operator display screen (350).

13. The instrumentation and control field device (210, 300) of claim 1 further comprising an operator display screen, and wherein the instructional routine stored in the memory (340) and adapted to be executed in the processor (212, 310) upon manual actuation of a pushbutton (360) that transmits a text instruction further causes the text instruction to be displayed on the operator display screen (350).

## Patentansprüche

1. Feldgerät (210, 300) zum Messen und Steuern, das umfasst:
einen Prozessor (212, 310), der den Betriebsstatus des Feldgeräts (210, 300) zum Messen und Steuern überwacht;
einen Speicher (340), der mit dem Prozessor (212, 310) gekoppelt ist;
einen Sprachgenerator (330) der Geräusche erzeugt, die Allophone umfassen;
einen Lautsprecher (213, 370);
einen Verstärker (365);
mindestens einen Druckknopf (355, 360);
einen Bewegungssensor, der auf Personen (150, 250) und/oder auf Fahrzeuge innerhalb einer vorbestimmten Nähe zu dem Feldgerät (210, 300) zum Messen und Steuern anspricht;
eine Alarmroutine (385), die in dem Speicher (340) gespeichert ist und angepasst ist, um von dem Prozessor (212, 310) auf das Erkennen durch den Prozessor (212, 310) hin, das das Feldgerät (210, 300) zum Messen und Steuern eine Reparatur oder Wartung benötigt, ausgeführt zu werden, wobei die Alarmroutine (385) dann, wenn der Bewegungssensor anzeigt, dass sich Personen und/oder Fahrzeuge innerhalb der vorbestimmten Nähe befinden, veranlasst, dass ein hörbarer Alarm (214) durch den Verstärker (365) und den Lautsprecher (213, 370) mit einer Lautstärke ertönen gelassen wird, die für Personen (150, 250) in der Umgebung des Feldgeräts (210, 300) hörbar ist;
eine Statusroutine (390), die in dem Speicher (340) gespeichert ist und angepasst ist, um von dem Prozessor (212, 310) auf eine manuelle Betätigung eines Druckknopfs (355) hin ausgeführt zu werden, welche einen Textstatus an den Sprachgenerator (330) überträgt, wobei der Sprachgenerator (330) den Textstatus in einen gesprochenen Status umwandelt und den gesprochenen Status weiterleitet, um ihn durch den Verstärker (365) und den Lautsprecher (213, 370) ertönen zu lassen; und
eine Instruktionsroutine (395), die in dem Speicher (340) gespeichert ist und angepasst ist, um in dem Prozessor (212, 310) auf eine manuelle Betätigung eines Druckknopfs (360) hin ausgeführt zu werden, welche eine Textinstruktion an den Sprachgenerator (330) überträgt, wobei der Sprachgenerator (330) die Textinstruktion in eine gesprochene Instruktion umwandelt und die gesprochene Instruktion weiterleitet, um sie durch den Verstärker (365) und den Lautsprecher (213, 370) ertönen zu lassen, wobei die Textinstruktion und die gesprochene Instruktion einen Bediener (150, 250) beim Bereitstellen der benötigten Reparatur oder Wartung anleiten.

2. Feldgerät zum Messen und Steuern nach Anspruch 1,
wobei das Feldgerät (210, 300) zum Messen und Steuern gewählt ist aus:
einem Drucksensor, einem Temperatursensor, einem Pegelsensor, einem Durchflusssensor, einem Druckmessaufnehmer, einem Temperaturmessaufnehmer, einem Pegelmessaufnehmer, einem Durchflussmessaufnehmer, einem Positionsschalter, einem Endschalter, einem Vibrationsmonitor, einem elektrischen Solenoid, einem pneumatischen Aktor, einer Heizung und einem Wärmetauscher.

3. Feldgerät (210, 300) zum Messen und Steuern nach Anspruch 1 oder 2,
wobei der hörbare Alarm (214) eine vorab aufgezeichnete Geräuschdatei ist.

4. Feldgerät (210, 300) zum Messen und Steuern nach Anspruch 1 oder 2,
wobei der hörbare Alarm (214) aus einer Vielzahl von Geräuschen gewählt wird und das Geräusch auf der Grundlage der Art der benötigten Reparatur oder Wartung gewählt wird.

5. Feldgerät (210, 300) zum Messen und Steuern nach Anspruch 1 oder 2,
wobei der hörbare Alarm (214) ein Textalarm ist, der an den Sprachgenerator (330) zur Umwandlung des Textalarms in einen gesprochenen Alarm übertragen wird.

6. Feldgerät (210, 300) zum Messen und Steuern nach Anspruch 1 oder 2,
das ferner einen Sprachsteuerungschip (335) umfasst, wobei der Textstatus und die Textinstruktion, die von dem Sprachgenerator (330) empfangen werden, zuerst von dem Sprachsteuerungschip (335) verarbeitet werden, welcher dem Sprachgenerator (330) signalisiert, dass er vorbestimmte Allophone durch den Verstärker (365) und den Lautsprecher (213, 370) ertönen lassen soll.

7. Feldgerät (210, 300) zum Messen und Steuern nach Anspruch 5, das ferner einen Sprachsteuerungschip (335) umfasst, der zuerst den Textalarm, den Textstatus und die Textinstruktion verarbeitet, die von dem Sprachgenerator (330) übertragen werden, und der dem Sprachgenerator (330) signalisiert, dass er vorbestimmte Allophone durch den Verstärker (365) und den Lautsprecher (213, 370) ertönen lassen soll.

8. Feldgerät (210, 300) zum Messen und Steuern nach Anspruch 1,
das ferner eine Sprachsteuerungsroutine umfasst, die in dem Speicher (340) gespeichert ist und angepasst ist, um in dem Prozessor (212, 310) ausgeführt zu werden, wobei die Sprachsteuerungsroutine dem Sprachgenerator (330) signalisiert, dass er vorbestimmte Allophone durch den Verstärker (365) und den Lautsprecher (213, 370) ertönen lassen soll.

9. Feldgerät (210, 300) zum Messen und Steuern nach Anspruch 5,
das ferner eine Sprachsteuerungsroutine umfasst, die in dem Speicher (340) gespeichert ist und angepasst ist, um in dem Prozessor (212, 310) ausgeführt zu werden, wobei die Sprachsteuerungsroutine den Textalarm, den Textstatus und die Textinstruktion verarbeitet, die an den Sprachgenerator (330) übertragen werden, und dem Sprachgenerator (330) signalisiert, dass er vorbestimmte Allophone durch den Verstärker (365) und den Lautsprecher (213, 370) ertönen lassen soll.

10. Feldgerät (210, 300) zum Messen und Steuern nach Anspruch 1,
das ferner mindestens eine Anzeigeleuchte umfasst, und wobei die Alarmroutine (385), die in dem Speicher (340) gespeichert ist und angepasst ist, um von dem Prozessor (212, 310) auf eine benötigte Reparatur oder Wartung hin ausgeführt zu werden, ferner veranlasst, dass durch die Anzeigeleuchte ein visueller Alarm signalisiert wird.

11. Feldgerät (210, 300) zum Messen und Steuern nach Anspruch 1,
das ferner eine rote Anzeigeleuchte, eine gelbe Anzeigeleuchte und eine grüne Anzeigeleuchte umfasst, und wobei die Alarmroutine (385), die in dem Speicher (340) gespeichert ist und angepasst ist, um von dem Prozessor (212, 310) auf eine benötigte Reparatur oder Wartung hin ausgeführt zu werden, ferner veranlasst, dass ein visueller Alarm von der grünen Anzeigeleuchte, wenn die benötigte Reparatur oder Wartung eine Meldung vom Hinweistyp ist, von der gelben Leuchte, wenn die benötigte Reparatur oder Wartung ein Wartungsalarm ist, und von der roten Anzeigeleuchte, wenn die benötigte Reparatur oder Wartung ein Problem ist, das die sofortige Aufmerksamkeit eines Bedieners (150, 250) erfordert, signalisiert wird.

12. Feldgerät (210, 300) zum Messen und Steuern nach Anspruch 1,
das ferner einen Bedieneranzeigebildschirm umfasst, und wobei die Statusroutine (390), die in dem Speicher (340) gespeichert ist und angepasst ist, um in dem Prozessor (212, 310) auf eine manuelle Betätigung eines Druckknopfs (355) hin ausgeführt zu werden, die einen Textstatus überträgt, ferner veranlasst, dass der Textstatus auf dem Bedieneranzeigebildschirm (350) angezeigt wird.

13. Feldgerät (210, 300) zum Messen und Steuern nach Anspruch 1,
das ferner einen Bedieneranzeigebildschirm umfasst, und wobei die Instruktionsroutine, die in dem Speicher (340) gespeichert ist und angepasst ist, und in dem Prozessor (212, 310) auf eine manuelle Betätigung eines Druckknopfs (360) hin ausgeführt zu werden, die eine Textinstruktion überträgt, ferner veranlasst, dass die Textinstruktion auf dem Bedieneranzeigebildschirm (350) angezeigt wird.

## Revendications

1. Dispositif distant d'instrumentation et de commande (210, 300) comprenant :
un processeur (212, 310) qui contrôle l'état opérationnel du dispositif distant d'instrumentation et de commande (210, 300) ;
une mémoire (340) couplée au processeur (212, 310) ;
un synthétiseur de parole (330) qui produit des sons, comprenant des allophones ;
un haut-parleur (213, 370) ;
un amplificateur (365) ;
au moins un bouton-poussoir (355, 360) ;
un capteur de mouvement sensible à des membres du personnel (150, 250) et/ou à des véhicules à une proximité inférieure ou égale à une proximité prédéterminée du dispositif distant d'instrumentation et de commande (210, 300) ;
une routine d'alarme (385) stockée dans la mémoire (340) et adaptée à être exécutée par le processeur (212, 310) lors d'une reconnaissance par le processeur (212, 310) selon laquelle le dispositif distant d'instrumentation et de commande (210, 300) requiert une opération de réparation ou de maintenance, dans lequel si le capteur de mouvement indique que des membres du personnel et/ou des véhicules sont à une proximité inférieure ou égale à une proximité prédéterminée, la routine d'alarme (385) provoque l'émission d'une alarme audible (214) par l'amplificateur (365) et le haut-parleur (213, 370) à un niveau audible par les membres du personnel (150, 250) dans les environs du dispositif distant (210, 300) ;
une routine d'état (390) stockée dans la mémoire (340) et adaptée à être exécutée dans le processeur (212, 310) lors de l'actionnement manuel d'un bouton-poussoir (355) qui transmet un état de texte au synthétiseur de parole (330), le synthétiseur de parole (330) convertissant l'état de texte en un état parlé et faisant avancer l'état parlé pour son émission par l'amplificateur (365) et le haut-parleur (213, 370) ; et
une routine d'instruction (395) stockée dans la mémoire (340) et adaptée à être exécutée dans le processeur (212, 310) lors de l'actionnement manuel d'un bouton-poussoir (360) qui transmet une instruction de texte au synthétiseur de parole (330), le synthétiseur de parole (330) convertissant l'instruction de texte en une instruction parlée et faisant avancer l'instruction parlée pour son émission par l'amplificateur (365) et le haut-parleur (213, 370), dans lequel l'instruction de texte et l'instruction parlée guident un opérateur (150, 250) pour la réalisation de l'opération de réparation ou de maintenance requise.

2. Dispositif distant d'instrumentation et de commande selon la revendication 1, dans lequel le dispositif distant d'instrumentation et de commande (210, 300) est un élément sélectionné parmi : un capteur de pression, un capteur de température, un capteur de niveau, un capteur d'écoulement, un émetteur de pression, un émetteur de température, un émetteur de niveau, un émetteur de débit, un commutateur de position, un commutateur de limite, un contrôleur de vibration, un solénoïde électrique, un actionneur pneumatique, un dispositif de chauffage et un échangeur de chaleur.

3. Dispositif distant d'instrumentation et de commande (210, 300) selon la revendication 1 ou 2, dans lequel l'alarme audible (214) est un fichier audio préenregistré.

4. Dispositif distant d'instrumentation et de commande (210, 300) selon la revendication 1 ou 2, dans lequel l'alarme audible (214) est sélectionnée parmi une pluralité de sons et le son est sélectionné sur la base de la nature de l'opération de réparation ou de maintenance requise.

5. Dispositif distant d'instrumentation et de commande (210, 300) selon la revendication 1 ou 2, dans lequel l'alarme audible (214) est une alarme de texte qui est transmise au synthétiseur de parole (330) pour la conversion de l'alarme de texte en une alarme parlée.

6. Dispositif distant d'instrumentation et de commande (210, 300) selon la revendication 1 ou 2, comprenant en outre une puce de commande de parole (335), dans lequel l'état de texte et l'instruction de texte reçus par le synthétiseur de parole (330) sont d'abord traités par la puce de commande de parole (335), qui communique par signaux avec le synthétiseur de parole (330) pour émettre des allophones prédéterminés par le biais de l'amplificateur (365) et du haut-parleur (213, 370).

7. Dispositif distant d'instrumentation et de commande (210, 300) selon la revendication 5, comprenant en outre une puce de commande de parole (335) qui traite d'abord l'alarme de texte, l'état de texte et l'instruction de texte qui sont transmis par le synthétiseur de parole (330), et qui communique par signaux avec le synthétiseur de parole (330) pour émettre des allophones prédéterminés par le biais de l'amplificateur (365) et du haut-parleur (213, 370).

8. Dispositif distant d'instrumentation et de commande (210, 300) selon la revendication 1, comprenant en outre une routine de commande de parole stockée dans la mémoire (340) et adaptée à être exécutée dans le processeur (212, 310), dans lequel la routine de commande de parole communique par signaux avec le synthétiseur de parole (330) pour émettre des allophones prédéterminés par le biais de l'amplificateur (365) et du haut-parleur (213, 370).

9. Dispositif distant d'instrumentation et de commande (210, 300) selon la revendication 5, comprenant en outre une routine de commande de parole stockée dans la mémoire (340) et adaptée à être exécutée dans le processeur (212, 310), dans lequel la routine de commande de parole traite l'alarme de texte, l'état de texte et l'instruction de texte transmis au synthétiseur de parole (330) et communique par signaux avec le synthétiseur de parole (330) pour émettre des allophones prédéterminés par le biais de l'amplificateur (365) et du haut-parleur (213, 370).

10. Dispositif distant d'instrumentation et de commande (210, 300) selon la revendication 1, comprenant en outre au moins un voyant lumineux, et dans lequel la routine d'alarme (385) stockée dans la mémoire (340) et adaptée à être exécutée par le processeur (212, 310) lors d'une opération de réparation ou de maintenance requise provoque en outre le signalement d'une alarme visuelle par le voyant lumineux.

11. Dispositif distant d'instrumentation et de commande (210, 300) selon la revendication 1 comprenant en outre un voyant lumineux rouge, un voyant lumineux jaune et un voyant lumineux vert, et dans lequel la routine d'alarme (385) stockée dans la mémoire (340) et adaptée à être exécutée par le processeur (212, 310) lors d'une opération de réparation et de maintenance requise amène en outre une alarme visuelle à être signalée par le voyant lumineux vert lorsque l'opération de réparation ou de maintenance requise est un message du type consultatif, par le voyant lumineux jaune lorsque l'opération de réparation ou de maintenance requise est une alarme de maintenance, et par le voyant lumineux rouge lorsque l'opération de réparation ou de maintenance requise est un problème requérant l'attention immédiate d'un opérateur (150, 250).

12. Dispositif distant d'instrumentation et de commande (210, 300) selon la revendication 1, comprenant en outre un écran d'affichage d'opérateur, et dans lequel la routine d'état (390) stockée dans la mémoire (340) et adaptée à être exécutée dans le processeur (212, 310) lors de l'actionnement manuel d'un bouton-poussoir (355) qui transmet un état de texte amène en outre l'état de texte à être affiché sur l'écran d'affichage d'opérateur (350).

13. Dispositif distant d'instrumentation et de commande (210, 300) selon la revendication 1 comprenant en outre un écran d'affichage d'opérateur, et dans lequel la routine d'instruction stockée dans la mémoire (340) et adaptée à être exécutée dans le processeur (212, 310) lors de l'actionnement manuel d'un bouton-poussoir (360) qui transmet une instruction de texte amène en outre l'instruction de texte à être affichée sur l'écran d'affichage d'opérateur (350).
